Europäisches Patentamt

European Patent Office

Office européen des brevets

(19)

(11) **EP 0 821 296 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(51) Int Cl.⁷: **G05D 1/02**, A01B 69/00

(21) Anmeldenummer: **97110717.2**

(22) Anmeldetag: **01.07.1997**

(54) **Routenplanungssystem für landwirtschaftliche Arbeitsfahrzeuge**

Route planning system for agricultural working vehicles

Système de planification d'itinéraire pour des véhicules agricoles

(84) Benannte Vertragsstaaten:
**BE DE DK FR GB IT NL**

(30) Priorität: **23.07.1996 DE 19629618**

(43) Veröffentlichungstag der Anmeldung:
**28.01.1998 Patentblatt 1998/05**

(73) Patentinhaber: **CLAAS KGaA**
**33428 Harsewinkel (DE)**

(72) Erfinder: **Diekhans, Norbert, Dr.**
**33335 Gütersloh (DE)**

(56) Entgegenhaltungen:
**EP-A- 0 349 652        EP-A- 0 354 562**
**EP-A- 0 494 499        EP-A- 0 618 523**
**EP-A- 0 660 290        EP-A- 0 702 891**
**WO-A-91/09275         WO-A-92/05505**
**WO-A-95/16228         WO-A-95/31759**
**DE-A- 4 342 171        US-A- 4 211 921**
**US-A- 4 555 725        US-A- 4 628 456**
**US-A- 5 546 093**

**Beschreibung**

Die Erfindung bezieht sich auf ein Routenplanungssystem für landwirtschaftliche Arbeitsfahrzeuge, beispielsweise für einen Mähdrescher, mit einer definierten Arbeitsbreite auf einem Feld.

Nachdem die Leistungsfähigkeit landwirtschaftlicher Arbeitsfahrzeuge immer weiter gesteigert wurde, gewinnt die Einsatzplanung/Organisation des Arbeitsablaufes für leistungsstarke Arbeitsfahrzeuge wie beispielsweise Mähdrescher, aber auch andere landwirtschaftliche Maschinen wie Düngerstreuer, Sämaschinen, Feldhäcksler, Mähwerke, Wender, Schwader etc., immer mehr an Bedeutung. Bei der Getreideernte steht wetterbedingt nur eine begrenzte Anzahl von Mähdruschstunden zur Verfügung, die allerdings oftmals wegen einer mangelhaften Einsatzplanung nicht optimal ausgenutzt werden. Auch für andere landwirtschaftliche Maschinen ist eine präzise Einsatzplanung wichtig, um die theoretische Leistungsfähigkeit der Maschinen auch im praktischen Einsatz zu erreichen.

Aus der DE 43 42 171 ist ein Verfahren zur Düngung landwirtschaftlicher Nutzflächen unter Einsatz von Arbeitsfahrzeugen, die mit einem GPS-Satellitenempfänger zur Positionsbestimmung ausgestattet sind, bekannt. Dabei wird der jeweils bereits zurückgelegte Fahrweg aufgezeichnet und dem Fahrer auf einem Kontrollmonitor gemeinsam mit der momentanen Position des Arbeitsfahrzeuges angezeigt. Somit kann der Fahrer zu jeder Zeit überprüfen, ob der bisher bearbeitete Feldbereich fehlerfrei, das heißt ohne Auslassung irgendwelcher Teilbereiche, bearbeitet worden ist, oder ob bestimmte Feldbereiche noch nicht bearbeitet wurden. Dieses System gestattet das frühzeitige Erkennen von Feldbearbeitungsfehlern, wodurch Zeit für eine aufwendige Fehlersuche und Korrekturen gespart wird. Allerdings ist eine Einsatzplanung zur optimalen Auslastung des Arbeitsfahrzeuges mit diesem Verfahren nicht möglich.

In der WO 95/31759 wird ein automatisches Lenksystem für unbemannte Fahrzeuge offenbart. Dieses unbemannte Fahrzeug wird anhand einer zuvor geplanten oder zuvor aufgezeichneten digitalen Karte bei der Überfahrt beispielsweise über ein Feldstück automatisch in Fahrgeschwindigkeit und Fahrtrichtung ferngesteuert. Dabei wird der tatsächlich zurückgelegte Fahrweg anhand von Positionssignalen, einer auf dem Fahrzeug angebrachten Navigationseinrichtung, ermittelt und mit dem geplanten Fahrweg verglichen. Der Vergleich erbringt die Information, inwieweit das unbemannte Fahrzeug dem geplanten Fahrweg folgt. Abweichungen werden erkannt, automatisch Steuersignale zur Korrektur des Fahrweges des unbemannten Fahrzeuges erzeugt und in entsprechende Fahrzeugbewegungen umgewandelt. Die Vorgabe des Fahrweges wird auf einem von dem Fahrzeug unabhängigen und räumlich getrennten Computer erstellt und mittels einer Funkverbindung an den Steuerungscomputer des unbemannten Fahrzeugs übertragen. Dabei kann die Vorgabe auf einer aufgezeichneten, zuvorigen, manuellen Fahrwegsteuerung beruhen oder anhand des Feldumrisse und einer bekannten Fahrwegstrategie erzeugt werden. Es wird ferner erwähnt, daß die digitale Fahrwegsplanung oder Karte auch mit zusätzlichen, positionsbezogenen Informationen zur positionsbezogenen Steuerung von Feldbearbeitungsgeräten am unbemannten Fahrzeug ausgestattet sein kann.

Nachteilig an dieser Fahrwegsplanung und der damit verbunden Spurführung ist die ungenügende Berücksichtigung von feld- beziehungsweise fahrzeugspezifischen Informationen bei der Fahrwegsplanung. Hierdurch wird ein Fahrweg geplant, der bestenfalls einem Fahrweg entspricht den ein Fahrer des Fahrzeuges auch gewählt hätte. Eine Optimierung und Reduzierung von Kosten bei der Überfahrt des Feldes werden nicht erreicht. Ferner wirkt sich sie getrennte Anordnung des Computers mit implementierter Fahrtroute und dem danach gesteuerten Fahrzeug nachteilig auf eine schnelle, präzise und sichere Spurführung sowie auf die allgemeine Flexibilität des Systems aus. Fällt beispielsweise der Computer oder die Funkstrecke aus, so kann eine Bearbeitung des Feldstücke nicht mehr fortgeführt werden. Selbst eine manuelle Steuerung des Fahrzeuges auf dem Feld anhand einer geplanten Route ist dann nicht mehr möglich.

In der EP 0821 296 A2 wird ein Verfahren und eine Vorrichtung zum Betrieb eines Mähdreschers offenbart, bei welchem die Einstellung der Betriebswerte eines Mähdreschers in Verbindung eines historischen Datenkatasters in Abhängigkeit der aktuellen Position des Mähdreschers auf dem Feldstück, vorgreifend adressiert, liest und entsprechend aktuell vorgibt. Zur Bestimmung der aktuellen Position des Mähdreschers auf dem Feldstück ist auf dem Mähdrescher eine Ortungsvorrichtung (GPS) angebracht. In einem Ausführungsbeispiel wird die aktuelle Position des Mähdreschers mittels einer Funkstrecke an einen stationären Prozessor zur Auswahl von Betriebsdaten aus einem stationären Katasterspeicher übermittelt Die ausgewählten Daten werden dann über die Funkstrecke von dem stationären Prozessor für einen angepasste Mähdreschereinstellung übermittelt und dort bei Bedarf visualisiert und zur Einstellung verwendet

In der WO 95/16228 wird ein System zur Führung eines Bearbeitungsgerätes bei der Veränderung eines Geländereliefs offenbart Eine Steuerungseinrichtung beinhaltet ein 3D- Geländemodell über das Bearbeitungszielmodell sowie über ein Istgeländemodell. Während der Bearbeitung des Geländes, beispielsweise durch ein Erdbewegungsgerät, werden die Bewegungen der dabei stattfindenden Arbeiten anhand der Einstellungen des Bearbeitungsgerätes und der Position des Arbeitsgerätes relativ zu dem gespeicherten Geländemodell in Echtzeit aufgezeichnet und ein gespeichertes Istgeländemodell anhand der verrichteten Arbeit aktualisiert. Zur Verfolgung des Fortganges der Arbeiten und Erkennung der noch ausstehenden Arbeiten in Verbindung mit dem Zielgeländemodell wird das jeweilige Ziel- beziehungsweise Istgeländemodelle auf einer graphischen Anzeige zusammen, getrennt oder in jeweilige Teilansichten dargestellt Bei der offenbarte Einrichtung handelt es sich um eine Einrichtung zur Steuerung eines Fahrzeug, welches ein Geländeprofil verändert und mit entsprechenden Arbeitsgeräten ausgestattet ist Zudem ergibt sich systembedingt der Nachteil, daß eine Planung der Bewegung des Arbeitsfahrzeuges nur anhand der Lage der Oberfläche durchgeführt wird. Eine eventuelle Planung hat das Ziel das Arbeitsfahrzeug so zu führen, daß das Gelände in das Zielgeländerelief umgeformt wird.

Aufgabe der Erfindung ist daher die Schaffung von Einrichtungen und Systemen für landwirtschaftliche Arbeitsfahrzeuge zur Generierung von Bearbeitungsfahrweg-Verläufen auf einem Feld, um eine verbesserte Auslastung der landwirtschaftlichen Arbeitsfahrzeuge zu erzielen und so beispielsweise die begrenzten Mähdruschzeiten besser auszunutzen oder der theoretischen Leistungsfähigkeit der Maschinen durch optimale Fahrwegplanung möglichst nahe zu kommen.

Diese Aufgabe wird dadurch gelöst, daß in eine elektronische Datenverarbeitungseinrichtung (EDV-Anlage/Computer) ein oder mehrere feldspezifische Daten, insbesondere Koordinaten für die Feldumrandung, und ein oder mehrere arbeitsfahrzeugspezifische Daten, wie beispielsweise die Arbeits-, Fahrwerks- oder Reifenbreite, Gewichte, Tankvolumina, Grenzneigungs- und Böschungswinkel eingebbar sind. Aufgrund der feldspezifischen und der arbeitsfahrzeugspezifischen Daten wird in der elektronischen Datenverarbeitungseinrichtung anhand von einem Berechnungsalgorithmus, der wenigstens ein Optimierungskriterium für die Bearbeitungsroute aufweist, der Bearbeitungsfahrweg-Verlauf in Form einer digitalisierten Bearbeitungsroute generiert und auf einer graphischen Anzeige in einer landwirtschaftlichen Arbeitsfahrzeug dargestellt.

Über diese graphische Anzeige, einen auf dem Arbeitsfahrzeug angeordneten Monitor, wird die Bearbeitungsroute dem Fahrer angezeigt. In Verbindung mit einem auf dem Arbeitsfahrzeug angeordneten Echtzeitortungssystem, insbesondere dem GPS-Satellitennavigationssystem, bildet die optimal geplante, digitalisierte Bearbeitungsroute die Basis für ein Spurführungssystem landwirtschaftlicher Arbeitsfahrzeuge. Zu diesem Zweck wird die digitalisierte Bearbeitungsroute in die Koordinaten des auf dem Arbeitsfahrzeug installierten Echtzeitortungssystems transformiert. Die digitalisierte Bearbeitungsroute liefert somit die Sollwerte für die Spurführung.

Neben dem oben beschriebenen Routenplanungssystem, wo die Bearbeitungsroute anhand von einem Berechnungsalgorithmus mit einem Optimierungskriterium generiert wird, ist es auch vorgesehen, die Bearbeitungsroute manuell, beispielsweise mit einem CAD-System, zu editieren. Hierzu wird die Feldumrandung auf einem Monitor mit Hilfe eines computergestützten

Zeichenprogramms dargestellt. Anschließend wird der Fahrwegverlauf unter Berücksichtigung der Arbeitsbreite innerhalb der Feldumrandung automatisch generiert oder von einer Bedienperson editiert. Anhand des eingezeichneten Fahrwegverlaufes wird eine digitalisierte Bearbeitungsroute erstellt und die digitalisierte Bearbeitungsroute in die Koordinaten des auf dem Arbeitsfahrzeug installierten Echtzeitortungssystems transformiert.

Mit der Kombination von Routenplanung und Spurführung ist eine optimale Auslastung und Einsatzplanung von landwirtschaftlichen Arbeitsfahrzeugen erreichbar. Durch die Planung und Einhaltung von optimalen Fahrspuren wird also die Wirtschaftlichkeit der eingesetzten Arbeitsfahrzeuge erhöht, da z.B. fast die volle Schneidwerksbreite ausgenutzt wird. Außerdem werden Betriebsmittel wie Kraftstoff, Saatgut, Dünger oder Pflanzenschutzmittel eingespart. Überhöhte Emissionen von Pflanzenschutzmitteln und Dünger werden vermieden. Auch lassen sich bei optimaler Routenplanung Wendezeiten einsparen und mehrfaches Befahren von Feldabschnitten vermeiden, was gleichzeitig eine unerwünschte Bodenverdichtung durch mehrfaches Befahren mit schwerem Gerät vermindert.

Nachfolgend wird beschrieben, welche feldspezifischen Daten berücksichtigt werden. Die Koordinaten der Feldumrandung können aus einer Flur- oder Katasterkarte entnommen werden, was beispielsweise durch optische Abrasterung mittels eines Scanners oder durch manuelles Abtasten mittels eines Digitalisierstiftes erfolgen kann. Ferner ist es vorgesehen, die Feldumrandung durch Abfahren derselben mit einem Arbeitsfahrzeug, das eine Ortungseinrichtung, insbesondere einen Satelliten-Navigationsempfänger (GPS-Empfänger) aufweist, zu ermitteln, wobei während der Umrandungsfahrt fortlaufend die Position des Arbeitsfahrzeuges ermittelt und abgespeichert wird. Analog dazu ist es auch möglich, daß die Feldumrandung ermittelt wird, indem eine Person mit einem mobilen GPS-Empfänger die Feldumrandung abläuft, wobei während des Ablaufens fortlaufend die Position ermittelt und abgespeichert wird. Bei einem vieleckigen Feld kann die Feldumrandung auch durch Angabe aller Eckpunkte ermittelt werden. Darüber hinaus ist es vorgesehen, die Feldumrandung bei rechteckigen oder dreieckigen Feldern durch Angabe der Seitenlängen zu ermitteln.

Bestandteil der feldspezifischen Daten sind auch die folgenden Merkmale:

- ein von der Feldumrandung begrenztes, digitales Geländerelief, das auch Höheninformationen

oder Informationen über bearbeitungskritische Neigungswinkel des Bodens enthält,

- die Position und die Größe von Hindernissen, wie Bäume, Steine, Bäche, Teiche, oder Strommasten o.dgl. auf dem Feld,

- Angaben über an das zu bearbeitende Feld angrenzende Geländebereiche (andere Felder, Wege, Straßen), die beispielsweise für Wendemanöver benutzt werden können,
- Angaben über die Ertragsdichte des Feldes,
- ein Ertragskataster des Feldes,
- Angaben über die Fruchtart/-sorte,
- Angaben über die Bodenart und Bodenbeschaffenheit des Feldes,
- ein Bodenbeschaffenheitskataster des Feldes,
- Angaben über feste Erntegut-Abladepositionen.

Ferner ist es vorgesehen, daß die feldspezifischen Daten Angaben über frühere Bearbeitungsfahrweg-Verläufe in einer chronologischen Feldbearbeitungskette umfassen. Beispielsweise ist es vorgesehen, daß die feldspezifischen Daten für das Routenplanungssystem einer Erntemaschine den Bearbeitungsfahrweg-Verlauf aus der vorangegangenen Bearbeitung des Feldes durch ein Saatgut-Ausbringungsfahrzeug umfassen. Zur Bodenschonung können die Fahrwege aufeinanderfolgender Bearbeitungen auch so geplant werden, daß die Reifenspuren nebeneinanderliegen und so jeweils andere Zonen des Feldes durch den Bearbeitungsvorgang verdichtet werden.

Bestandteil der arbeitsfahrzeugspezifischen Daten sind neben der Arbeitsbreite die folgenden Merkmale:

- die geometrischen Abmaße (Länge, Breite, Höhe) des Arbeitsfahrzeuges,
- Angaben zur Reaktion des Arbeitsfahrzeuges auf ein bestimmtes Einschlagen der Lenkachse (Wendekreis),
- Angaben zur Antriebsleistung des Arbeitsfahrzeuges und/oder Angaben zu Leistungswerten von Bearbeitungsgeräten am Arbeitsfahrzeug,
- die Höchstgeschwindigkeit des Arbeitsfahrzeuges,
- Angaben über optimale Fahrgeschwindigkeiten bei gegebenen Bodenverhältnissen,
- bei einer Erntemaschine: Angaben über optimale Fahrgeschwindigkeiten für bestimmte Fruchtarten/-sorten,
- Angaben über optimale Fahrgeschwindigkeiten für bestimmte Ertragsdichten,
- Angaben über Verbrauchswerte von Betriebsmitteln wie beispielsweise den Kraftstoffverbrauch, Saatgut, auszubringende Flüssigkeiten,
- Angabe über das Fassungsvermögen des Kraftstofftanks,
- das Fassungsvermögen des Korntanks eines Mähdreschers oder eines begleitenden Ladefahrzeugs,
- Entleergeschwindigkeit des Korntanks,
- Angaben über die maximale Einsatzdauer, die beispielsweise durch Wartungsintervalle begrenzt ist,
- Fahrspur-, Fahrgassen- und Reifenbreite, Grenzneigungs- und -böschungswinkel.

Das Routenplanungssystem ist in der Lage, mehrere Arbeitsfahrzeuge mit gleichen oder unterschiedlichen arbeitsfahrzeugspezifischen Daten zu berücksichtigen.

Die Optimierungskriterien zur Generierung der Bearbeitungsroute umfassen die folgenden Punkte:

- die Bestimmung des kürzesten Weges,
- die Bestimmung des schnellsten Weges,
- die Bestimmung des kraftstoffsparendsten Weges,
- bei einer das Erntegut aufnehmenden Erntemaschine: die Minimierung von Verlustzeiten und/o der Fahrwegen für das Abladen/Abtanken des Erntegutes,
- die Bestimmung des ungefährlichsten Weges,
- bei einem Saatgut, Dünge-, Pflanzenschutz- oder Unkrautvernichtungsmittel ausbringenden Arbeitsfahrzeug: die Minimierung von Verlustzeiten und/oder Fahrwegen für die Wiederaufnahme/Wiederauftanken der auszubringenden Mittel
- Bodenschonung und Vermeidung von Bodenverdichtung.

Auch die Kombination von Optimierungskriterien ist vorgesehen.

Das Routenplanungssystem für einen Mähdrescher gibt vorzugweise die Position/Positionen an, an denen der Korntank des Mähdreschers voraussichtlich gefüllt ist. Darüberhinaus ist vorgesehen, daß das Routenplanungssystem eine günstige Parallelabtankstrecke für das Abtanken einer Erntemaschine auf ein parallel fahrendes Abtankfahrzeug bestimmt.

Anstatt eine einheitliche Routenplanung für ein Gesamtfeld durchzuführen, kann die Routenplanung auch nur auf einem oder mehreren Teilflächenbereichen des Feldes durchgeführt werden. So kann ein Feld in bestimmte Schlagbereiche unterteilt werden und für jeden Schlag eine eigenständige Routenplanung durchgeführt werden. Außerdem können z.B. Bereiche um Feldhindernisse oder Feldrandbereiche ausgespart werden.

Mit dem Routenplanungssystem kann anhand der Feldumrandung eine Berechnung der Gesamtfläche durchführt werden. Dies kann z.B. durch numerische Integration erfolgen. Vorzugweise erfolgt die Berechnung der Fläche unter Berücksichtigung des Feldhöhenreliefs, da besonders bei hügeligem Gelände die projezierte Fläche erheblich von der tatsächlichen Fläche abweicht. Zusätzlich kann zu jeder Position auf der Bearbeitungsroute die noch zu bearbeitende Fläche berechnet werden. Mit dem Routenplanungssystem kann eine Schlagunterteilung parallel zu Fahrgassen und/oder in ganzzahligen Vielfachen der wirksamen Arbeitsbreite (z.B. Schnittbreite eines Mähdreschers) durchgeführt werden. Außerdem ist es vorgesehen, daß das Routenplanungssystem einen Koordinationsplan für mehrere Arbeitsfahrzeuge auf einem Feld generiert, in dem die Fahrtreihenfolge der Arbeitsfahrzuge, die Abstände in Fahrtrichtung und der Versatz quer zur Fahrtrichtung berücksichtigt sind. Vorzugsweise umfaßt das Routenplanungssystem Bearbeitungsfahrweg-Verläufe für Wendemanöver (z.B. 180° oder 90° -Wendemanöver).

In einer Ausführungsform wird die Bearbeitungsroute auf einer elektronischen Datenverarbeitungseinrichtung einer Hof-/Betriebstation (Hofrechner) erstellt. Dabei wird die auf dem Hofrechner erstellte Bearbeitungsroute mittels eines tragbaren Datenträgers (z.B.Diskette, Chipkarte, PCMCIA-Karte) zu einer auf dem Arbeitsfahrzeug angeordneten elektronischen Datenverarbeitungseinrichtung (Fahrzeugrechner) übertragen. Eine Übertragung per Funk ist ebenso vorgesehen. In einer weiteren Ausführungsform wird die Bearbeitungsroute auf einer am Arbeitsfahrzeug angeordneten elektronischen Datenverarbeitungsanlage/ Fahrzeugrechner) erstellt. Die feldspezifischen und/oder arbeitsfahrzeugspezifischen Daten zur Erstellung der Bearbeitungsroute werden mittels eines tragbaren Datenträgers an den Fahrzeugrechner übertragen. Auch eine Übertagung dieser Daten per Funk ist vorgesehen.

Darüber hinaus ist es vorgesehen, daß die arbeitsfahrzeugspezifischen Daten in dem Fahrzeugrechner gespeichert sind und zur Erstellung der Bearbeitungsroute im Fahrzeugrechner abrufbar sind. Auch eine manuelle Eingabe der arbeitsfahrzeugspezifischen und/oder der feldspez. Daten ist möglich.An Hand der Bearbeitungsreihenfolge der Koordinaten der digitalisierten Bearbeitungsroute im Echtzeitortungssystem werden Bearbeitungsrichtungsvektoren berechnet. Dabei ist jedem Koordinatenpunkt der digitalisierten Bearbeitungsroute jeweils ein Bearbeitungsrichtungsvektor zugeordnet. Die Koordinaten (Referenzpunkte) der digitalisierten Bearbeitungsroute im Echtzeitortungssystem können sich auf die Mitte des Arbeitsfahrzeuges oder des am Arbeitsfahrzeug angeordneten Bearbeitungsgerätes beziehen. Ferner ist es vorgesehen, daß die Koordinaten sich auf die linke oder rechte Begrenzungspositon des am Arbeitsfahrzeug angeordneten Arbeitsgerätes, z.B. linke Halmteilerspitze beim Schneidwerk eines Mähdreschers, beziehen.

Für die Spurführung landwirtschaftlicher Arbeitsfahrzeuge auf einem Feld weisen diese ein hochpräzises Echtzeitortungssystem zur Bestimmung der Positon und des Richtungsvektors der Fahrbewegung auf. Auf einer am Arbeitsfahrzeug angeordneten graphischen Anzeige (Monitor) werden die momentane Position und Bewegungsrichtung des Arbeitsfahrzeuges als Istwerte, vorzugsweise in Vektordarstellung, angezeigt. Diese Werte können sich auch auf das am Arbeitsfahrzeug angeordnete Arbeitsgerät beziehen. Zusätzlich wird auf dem Monitor der Bearbeitungsfahrweg-Verlauf einer zuvor geplanten, digitalisierten Bearbeitungsroute (Sollwerte) des Feldes dargestellt. Somit ist es dem Fahrer möglich, durch Beobachtung des Monitors festzustellen, ob er sich noch auf der geplanten Bearbeitungsroute befindet oder nicht, und ggf. entsprechende Lenkkorrekturen vorzunehmen.

Die Sollwerte und Istwerte werden einer elektronischen Auswerteeinheit des Arbeitsfahrzeuges zugeführt, wo aus dem Vergleich der Sollwerte und Istwerte laufend Lenksignale generiert werden. Zu den Sollwerten gehören die Sollposition und ein Soll-Bearbeitungsrichtungsvektor. Zu den Istwerten gehören die Istposition und die Bewegungsrichtung des Arbeitsfahrzeuges. .

Die durch den Soll/Ist-Vegleich erzeugten Lenksignale können dem Fahrer optisch und/oder akustisch angezeigt werden, damit dieser schnell regieren kann, wenn es zu Abweichungen kommt.

In einer weiterführenden Ausführungsform werden die Lenksignale einer automatische Lenkungsteuerung des Arbeitsfahrzeuges zugeführt. Während eines automatischen Lenkmanövers wird die Fahrgeschwindigkeit des Arbeitsfahrzeuges in vorteilhafter Weise automatisch reduziert, um eine gewisse Lenkstabilität zu erzielen.

Zur Berücksichtigung von Feldhindernissen wird auf Angaben in der der Spurführung zugrundeliegenden Bearbeitungsroute über Position und Größe der Hindernisse zurückgegriffen. Die Hindernisdaten aus der Bearbeitungsroute können für eine automatische Höhenregelung des am Arbeitsfahrzeug angeordneten Bearbeitungsgerätes verwendet werden, so daß die Hindernisse mit einem teilweise angehobenen Bearbeitungsgerät überfahren werden können. Zusätzlich werden die Hindernisse dem Fahrer auf dem Monitor angezeigt.

Die genau bestimmte Position der GPS-Empfangsantenne auf dem Arbeitsfahrzeug kann als Referenz-Istwert auf die linke oder rechte Begrenzungspositon des am Arbeitsfahrzeug angeordneten Arbeitsgerätes, z.B. linke Halmteilerspitze beim Schneidwerk eines Mähdreschers, umtransformiert werden. Natürlich ist auch eine Umtransformation auf andere Punkte am Bearbeitungsgerät möglich. Zur Verbesserung der Lenkstabilität ist es in vorteilhafter Weise vorgesehen, die genau bestimmte Position der GPS-Empfangsantenne auf dem Arbeitsfahrzeug als Referenz-Istwert auf einen in Fahrtrichtung gegenüber dem Bearbeitungsgerät vorausliegenden virtuellen Punkt zu transformieren.

Als Echtzeitortungssystem wird vorzugsweise ein PDGPS-System (Precise Differential GPS) verwendet. Damit im Falle eines GPS-Ausfalls das Ortungssystem weiterbetrieben werden kann, ist es vorgesehen, ein Koppelnavigationssystem bestehend aus einem PDGPS-System und aus verschiedenen am Arbeitsfahrzeug angeordneten Stützsensoren (Radsensoren, Geschwindigkeitsmesser, Lenkwinkelssenssoren, Richtungssensoren, wie Piezokreisel) einzusetzen. Um eine erhöhte Betriebssicherhiet und Zuverlässigkeit des Spurführungssystems zu erreichen, kann zusätzlich ein auf Reflexortung (z.B. Laserscanner) beruhendes Erntegutkanten-Orientierungssystem vorhanden sein. Auch der Einsatz eines auf Abtastung beruhenden Erntegutreihen-Orientierungsssystems ist vorgesehen.

Anhand der beigefügten Zeichnungen soll die Erfindung abschließend noch einmal verdeutlicht werden.

Es zeigen:

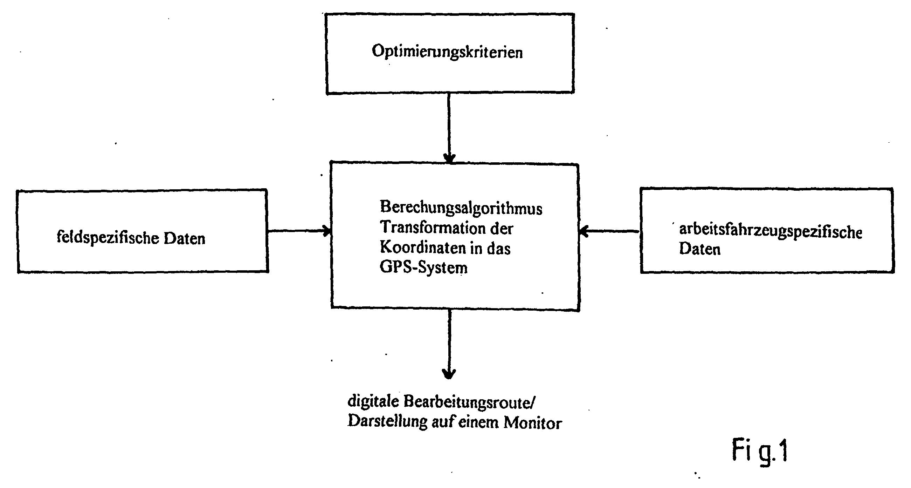

Figur 1          ein Blockdiagramm für das automatische Routenplanungssystem,

Figur 1          ein Blockdiagramm für das automatische Routenplanungssystem,

Figur 2 A, B     Beispiele für geplante Bearbeitungsfahrwegsverläufe,

Figur 3          ein Feld mit Schlagunterteilung,

Figur 4A, B      beispielhafte Darstellungen von Wendemanövern,

Figur 5          eine Synchronisation von zwei Fahrzeugen,

Figur 6          einen vergrößerten Ausschnitt einer Bearbeitungsroute,

Figur 7          eine Maschine mit GPS-Antenne und Referenzpunkt,

Figur 8          eine beispielhafte Monitoranzeige in der Fahrerkabine.

In Figur 1 ist ein Blockdiagramm für das automatische Routenplanungssystem gezeigt. Einer EDV-Anlage (Hof-/ Fahrzeugrechner/ Bordcomputer), in der ein Berechnungsalgorithmus implementiert ist, werden die feldspezifischen und die arbeitsfahrzeugspezifischen Daten als Randwerte eingegeben. Anhand eines oder mehrerer Optimierungskriterien wird dann ein optimaler Bearbeitungs-Fahrwegs-Verlauf in Form einer digitalen Bearbeitungsroute errechnet. Die Koordinaten der digitalen Bearbeitungsroute werden dann in das GPS-Koordinatensystem transformiert.

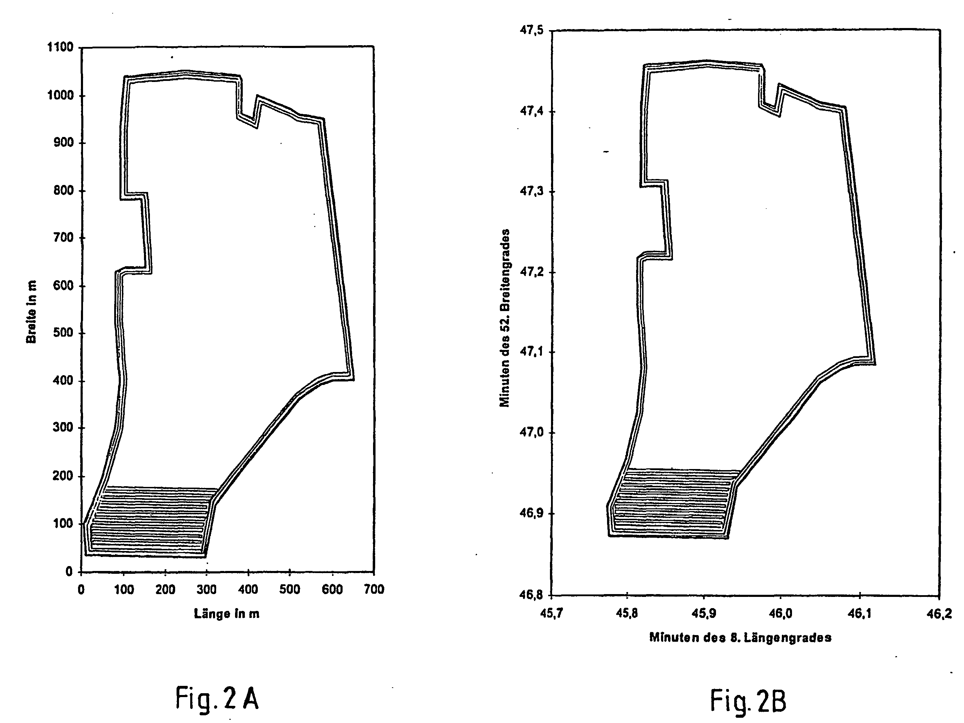

In Fig.2A,B sind die geplanten Bearbeitungsfahrweg-Verläufe auf einem Feld dargestellt - einmal in relativen Koordinaten (Fig.2A) und einmal in absoluten Koordinaten des GPS-Systems (Fig. 2B). Für die Umrechnung der relativen Koordinaten in absolute Koordinaten gilt:

$$\text{Für die Länge:} \quad \varphi_{absolut} = \frac{\varphi_{relativ}}{1851,85\,\frac{m}{\min}} + \varphi_{bezug}$$

$$\text{Für die Breite:} \quad \lambda_{absolut} = \frac{\lambda_{relativ}}{1851,85\,\frac{m}{\min} \times \cos(Breitengrad)} + \lambda_{bezug}$$

Die Planung der Bearbeitungsfahrweg-Verläufe in Fig.2A,B wurde mit Hilfe eines CAD-Programms für NC-Maschinen durchgeführt. Das Feld wurde dabei durch ein Werkstück und das landwirtschaftliche Arbeitsfahrzeug durch ein Werkzeug (z.B.) einen Fräskopf simuliert. Die Feldumrisse lagen in Form einer Karte vor, so daß die Eckpunkte bezogen auf ein gewähltes Koordinatensystem eingegeben werden konnten. Anschließend wurden die Fahrspuren unter Berücksichtigung einer gewählten Arbeitsbreite von 6m eingezeichnet. Die Spur bezieht sich dabei auf die die Mitte des Arbeitsfahrzeuges. Dann wurden die erzeugten Spuren als Wege des Werkzeuges definiert, so daß das CAD-Programm die Koordinaten für die NC-Maschine berechnen konnte. Die äußere Linie stellt die Feldumrandung dar, die im Abstand der gewählten Arbeitsbreite dreimal nachgefahren wurde. Die weiteren inneren Spuren sind beispielhaft im unteren Teil aufgetragen.

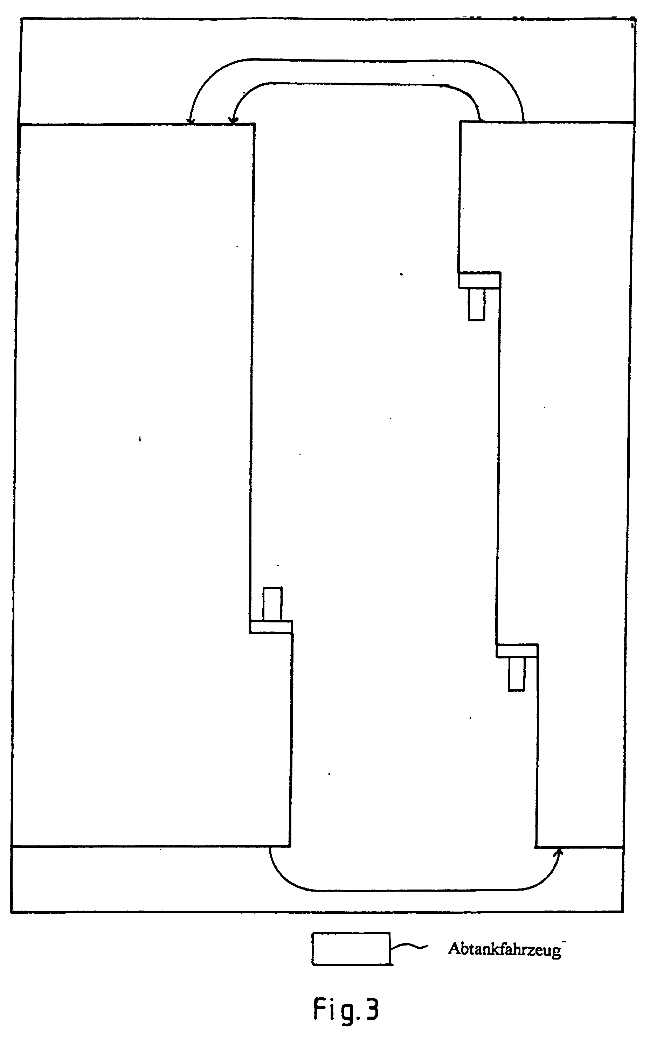

In Figur 3 ist ein Feld mit Schlagunterteilung gezeigt, auf dem drei Mähdrescher im Ernteeinsatz sind. Der Koordinationsplan für die Mähdrescher läßt sich mit dem automatischen Routenplanungssystem generieren, in dem die Fahrtreihenfolge der Mähdrescher, die Abstände in Fahrtrichtung und der Versatz quer zur Fahrtrichtung berücksichtigt sind.

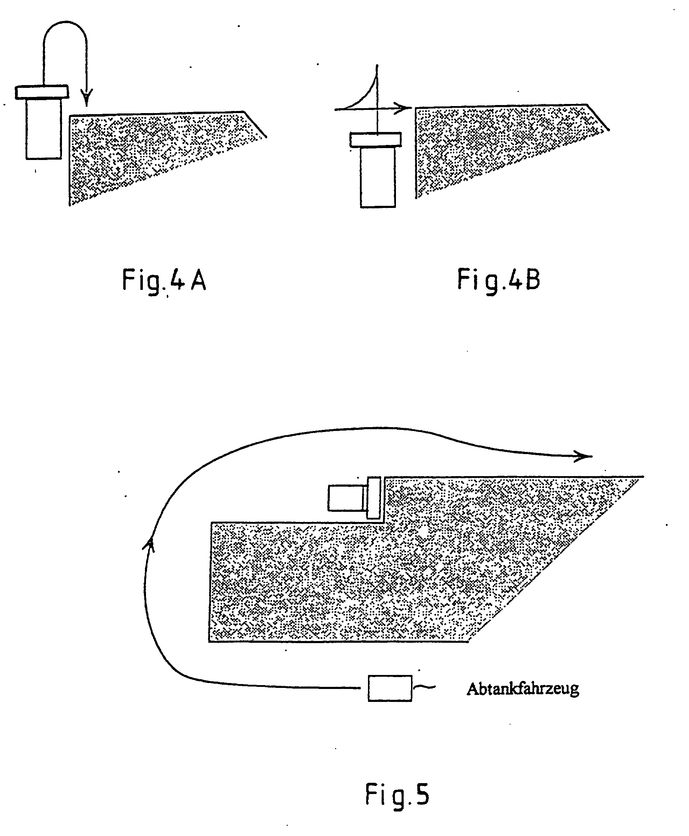

Fig.4A,B zeigen beispielhaft zwei Wendemanöver (180° und 90° -Wendemanöver). Solche Wendemanöver sind in dem Routenplanungssystem integriert, beispielsweise als eine Unterroutine.

Fig.5 zeigt die Synchronisation zwischen den Positionen und Geschwindigkeiten von Mähdrescher und Abtankfahrzeug, um ein paralleles Abtanken zu ermöglichen. Diese Synchronisation läßt sich mit dem automatischen Routenplanungssystem vorherbestimmen.

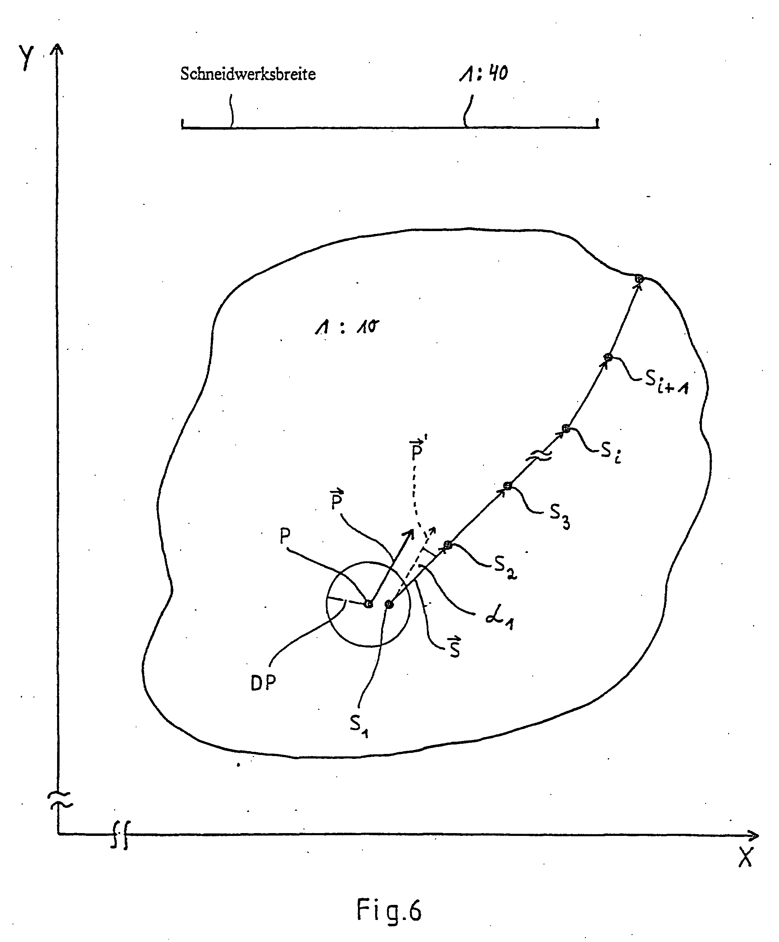

Fig.6 zeigt einen vergrößerten Ausschnitt der Bearbeitungsroute. Die Koordinaten der Bearbeitungsroute sind als Sollpositionen (S - $(X_S, Y_S)$) in einem Abstand von wie hier beispielhaft dargestellt 20 cm angeordnet. Jeder Sollposition ist ein Sollbearbeitungsrichtungsvektor (S) zugeordnet. Eingezeichnet ist auch die momentane Positon (P - $(X_P, Y_P)$) des Referenzpunktes am Arbeitsfahrzeug sowie der Fahrtrichtungsvektor (P). Die Ungenauigkeit (DP) der Positionsbestimmung im GPS-System ist ebenfalls eingezeichnet. Zur Generierung von Lenksignalen innerhalb des Spurführungssystems ist es vorgesehen, über einen Regelkreis den Abstand zwischen der momentanen Position des Arbeitsfahrzuges und dem Sollwert gemäß der geplanten Bearbeitungsroute zu minimieren. Als Regelkriterium ist dabei die Größe $((X_P - X_S) + (Y_P - X_S))^2$ zu minimieren. Ein weiteres Regelkriterium, das mit dem vorstehend genannten kombiniert wird, ist die Minimierung der Winkelabweichung zwischen dem Sollbearbeitungsrichtungsvektor (S) und dem Fahrtrichtungsvektor (P). Die Winkelabweichung wird zum Beispiel über das Skalarprodukt der Vektoren S und P beschrieben: S*P = Konstante * cos a. Wenn die Winkelabweichung gleich Null ist, hat das Skalarprodukt seinen maximalen Wert.

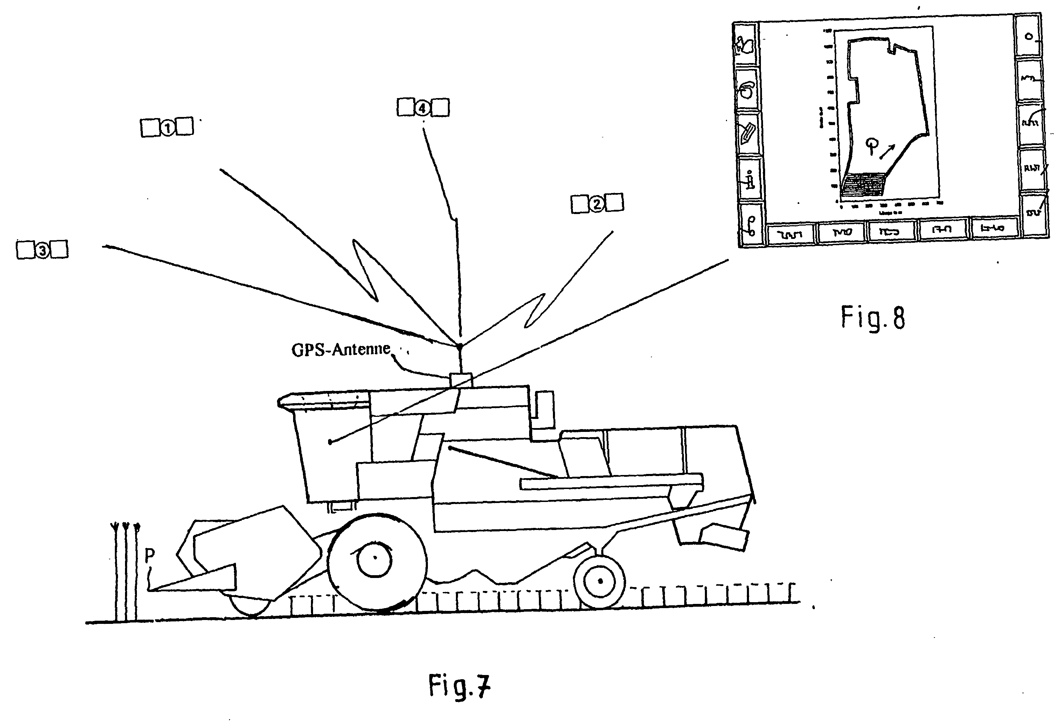

Fig.7 zeigt die Seitenansicht eines Mähdreschers mit einer auf dem Fahrzeugdach angeordneten GPS-Empfangsantenne und einem Referenzpunkt an der linken Halmteilerspitze.

Fig.8 zeigt den in der Fahrzeugkabine fest oder herausnehmbar angeordneten Monitor zur Darstellung der Bearbeitungsroute und der momentanen Position auf dem Feld.

**Patentansprüche**

1. Routenplanungssystem für landwirtschaftliche Arbeitsfahrzeuge mit einer definierten Arbeitsbreite zur Generierung von Bearbeitungsfahrweg- Verläufen auf einem Feld,
   **dadurch gekennzeichnet,**
   **daß** in eine elektronische Datenverarbeitungseinrichtung ein oder mehrere feldspezifische Daten und ein oder mehrere arbeitsfahrzeugspezifische Daten eingebbar sind, und aufgrund der feldspezifischen und der arbeitsfahrzeugspezifischen Daten in der elektronischen Datenverarbeitungseinrichtung anhand von einem Berechnungsalgorithmus, der wenigstens ein Optimierungskriterium für die Bearbeitungsroute aufweist, der Bearbeitungsfahrweg- Verlauf in Form einer digitalisierten Bearbeitungsroute generiert und daß das Arbeitsfahrzeug eine graphische Anzeige aufweist, auf welcher die digitalisierte Bearbeitungsroute darstellbar ist.

2. Routenplanungssystem nach Anspruch 1,
   **dadurch gekennzeichnet,**
   **daß** die Feldumrandung jeweils durch eines der folgenden Merkmale oder in beliebiger Kombination durch Angabe aller Eckpunkte oder bei rechteckigen oder dreieckigen Feldern durch Angabe der Seitenlängen ermittelt wird.

3. Routenplanungssystem nach einem oder mehreren der vorstehenden Ansprüche,
   **dadurch gekennzeichnet,**
   **daß** die feldspezifischen Daten eines der folgenden Merkmale oder in beliebiger Kombination miteinander mehrere Merkmale, und zwar ein von der Feldumrandung begrenztes, digitales Geländerelief, Angaben über die Position und die Größe von Hindernissen, wie Bäume oder Strommasten o. dgl. auf dem Feld, Angaben über an das zu bearbeitende Feld angrenzende Geländebereiche, wie andere Felder, Wege, Straßen, die beispielsweise für Wendemanöver benutzt werden können, Angaben über feste Erntegut-Abladepositionen und/ oder sonstige feldspezifischen Daten umfassen.

4. Routenplanungssystem nach einem oder mehreren der vorstehenden Ansprüche,
   **dadurch gekennzeichnet,**
   **daß** die arbeitsfahrzeugspezifischen Daten eines der folgenden Merkmale oder in beliebiger Kombination miteinander mehrere der folgenden Merkmale, und zwar die geometrischen Abmaße, wie Länge, Breite, Höhe des Arbeitsfahrzeuges, Angaben zur Reaktion des Arbeitsfahrzeuges auf ein bestimmtes Einschlagen der Lenkachse, Wendekreis, Angaben zur Antriebsleistung des Arbeitsfahrzeuges und/ oder Angaben zu Leistungswerten von Bearbeitungsgeräten am Arbeitsfahrzeug, eine Angabe über die Höchstgeschwindigkeit des Arbeitsfahrzeuges, Angaben über optimale Fahrgeschwindigkeiten bei gegebenen Bodenverhältnissen, Angaben über optimale Fahrgeschwindigkeiten für bestimmte Fruchtarten/ -sorten, Angaben über optimale Fahrgeschwindigkeiten-für bestimmte Ertragsdichten, Angaben über Verbrauchswerte von Betriebsmitteln wie beispielsweise den Kraftstoffverbrauch, eine Angabe über das Fassungsvermögen des Kraftstofftanks, das Fassungsvermögen von Vorratsbehältern oder des Korntanks, Entleergeschwindigkeiten der Vorratsbehälter oder des Korntanks, Angaben über die maximale Einsatzdauer, die beispielsweise durch Wartungsintervalle begrenzt ist, und/oder sonstige arbeitsfahrzeugspezifische Daten umfaßt.

5. Routenplanungssystem nach einem oder mehreren der vorstehenden Ansprüche,
**dadurch gekennzeichnet,**
**daß** dasselbe mehrere Arbeitsfahrzeuge mit gleichen oder unterschiedlichen arbeitsfahrzeugspezifischen Daten berücksichtigt.

6. Routenplanungssystem nach einem oder mehreren der vorstehenden Ansprüche,
**dadurch gekennzeichnet,**
**daß** das Optimierungskriterium oder die Optimierungskriterien für die Bearbeitungsroute aus einem oder mehreren der folgenden Merkmale besteht, und zwar die Bestimmung des kürzesten Weges, die Bestimmung des schnellsten Weges, die Bestimmung des kraftstoffsparendsten Weges, die Minimierung von Verlustzeiten und/ oder Fahrwegen für das Abladen/Abtanken des Erntegutes und/oder sonstiger Optimierungskriterien.

7. Routenplanungssystem nach einem oder mehreren der vorstehenden Ansprüche,
**dadurch gekennzeichnet,**
**daß** dasselbe die Position/ Positionen angibt, an denen der Korntank eines Mähdreschers voraussichtlich gefüllt ist.

8. Routenplanungssystem nach einem oder mehreren der vorstehenden Ansprüche,
**dadurch gekennzeichnet,**
**daß** dasselbe eine günstige Parallelabtankstrecke für das Abtanken einer Erntemaschine auf ein parallel fahrendes Abtankfahrzeug bestimmt.

9. Routenplanungssystem nach einem oder mehreren der vorstehenden Ansprüche,
**dadurch gekennzeichnet,**
**daß** ein Optimierungskriterium für die Bearbeitungsroute eines Saatgut, Dünge-, Pflanzenschutz- oder Unkrautvernichtungsmittel ausbringenden Arbeitsfahrzeuges die Minimierung von Verlustzeiten und/oder Fahrwegen für die Wiederaufnahme/Wiederauftanken der auszubringenden Mittel ist.

10. Routenplanungssystem nach einem oder mehreren der vorstehenden Ansprüche,
**dadurch gekennzeichnet,**
**daß** ein Optimierungskriterium die Bestimmung des ungefährlichsten Weges ist.

11. Routenplanungssystem nach einem oder mehreren der vorstehenden Ansprüche,
**dadurch gekennzeichnet,**
**daß** die Routenplanung nur auf einem oder mehreren Teilflächenbereichen des Feldes durchgeführt wird.

12. Routenplanungssystem nach einem oder mehreren der vorstehenden Ansprüche,
**dadurch gekennzeichnet,**
**daß** dasselbe anhand der Feldumrandung eine Berechnung der Gesamtfläche durchführt.

13. Routenplanungssystem nach einem oder mehreren der vorstehenden Ansprüche,
**dadurch gekennzeichnet,**
**daß** die Berechnung der Fläche unter Berücksichtigung des Höhenreliefs des Feldes erfolgt.

14. Routenplanungssystem nach einem oder mehreren der vorstehenden Ansprüche,
**dadurch gekennzeichnet,**
**daß** dasselbe eine Schlagunterteilung parallel zu Fahrgassen vornimmt.

15. Routenplanungssystem nach einem oder mehreren der vorstehenden Ansprüche,
**dadurch gekennzeichnet,**
**daß** dasselbe eine Schlagunterteilung in ganzzahligen Vielfachen der wirksamen Arbeitsbreite vornimmt.

16. Routenplanungssystem nach einem oder mehreren der vorstehenden Ansprüche,
**dadurch gekennzeichnet,**

**daß** dasselbe einen Koordinationsplan für mehrere Arbeitsfahrzeuge auf einem Feld generiert, in dem die Fahrtreihenfolge der Arbeitsfahrzeuge, die Abstände in Fahrtrichtung und der Versatz quer zur Fahrtrichtung berücksichtigt sind.

**17.** Routenplanungssystem nach einem oder mehreren der vorstehenden Ansprüche,
**dadurch gekennzeichnet,**
**daß** dasselbe Bearbeitungsfahrweg- Verläufe für Wendemanöver umfaßt.

**18.** Routenplanungssystem nach einem oder mehreren der vorstehenden Ansprüche,
**dadurch gekennzeichnet,**
**daß** dasselbe zu mindestens einer Position auf der Bearbeitungsroute die noch zu bearbeitende Fläche berechnet.

**19.** Routenplanungssystem nach einem oder mehreren der vorstehenden Ansprüche,
**dadurch gekennzeichnet,**
**daß** die Bearbeitungsroute auf einer elektronischen Datenverarbeitungseinrichtung einer Hof-/ Betriebstation erstellt wird.

**20.** Routenplanungssystem nach einem oder mehreren der vorstehenden Ansprüche,
**dadurch gekennzeichnet,**
**daß** die auf dem Hofrechner erstellte Bearbeitungsroute mittels eines tragbaren Datenträgers, wie beispielsweise einer Diskette, Chipkarte oder PCMCIA-Karte, zu einer auf dem Arbeitsfahrzeug angeordneten elektronischen Datenverarbeitungseinrichtung einem sogenannten Fahrzeugrechner übertragen wird.

**21.** Routenplanungssystem nach einem oder mehreren der vorstehenden Ansprüche,
**dadurch gekennzeichnet,**
**daß** die auf dem Hofrechner erstellte Bearbeitungsroute per Funk an den Fahrzeugrechner übertragen wird.

**22.** Routenplanungssystem nach einem oder mehreren der vorstehenden Ansprüche,
**dadurch gekennzeichnet,**
**daß** die Bearbeitungsroute auf einer am Arbeitsfahrzeug angeordneten elektronischen Datenverarbeitungsanlage einem sogenannten Fahrzeugrechner erstellt wird.

**23.** Routenplanungssystem nach einem oder mehreren der vorstehenden Ansprüche,
**dadurch gekennzeichnet,**
**daß** die feldspezifischen und/ oder arbeitsfahrzeugspezifischen Daten zur Erstellung der Bearbeitungsroute mittels eines tragbaren Datenträgers oder per Funk an den Fahrzeugrechner übertragen werden.

**24.** Routenplanungssystem nach einem oder mehreren der vorstehenden Ansprüche,
**dadurch gekennzeichnet,**
**daß** die digitalisierte Bearbeitungsroute in die Koordinaten eines auf dem Arbeitsfahrzeug installierten Echtzeitortungssystems, insbesondere des GPS-Systems, transformiert werden.

**25.** Routenplanungssystem nach einem oder mehreren der vorstehenden Ansprüche,
**dadurch gekennzeichnet,**
**daß** an Hand der Bearbeitungsreihenfolge der Koordinaten der digitalisierten Bearbeitungsroute im Echtzeitortungssystem Bearbeitungsrichtungsvektoren berechnet werden.

**26.** Routenplanungssystem nach einem oder mehreren der vorstehenden Ansprüche,
**dadurch gekennzeichnet,**
**daß** die Koordinaten der digitalisierten Bearbeitungsroute im Echtzeitortungssystem sich auf die Mitte des am Arbeitsfahrzeug angeordneten Arbeitsgerätes, zum Beispiel das Schneidwerk eines Mähdreschers, beziehen.

**27.** Routenplanungssystem nach einem oder mehreren der vorstehenden Ansprüche,
**dadurch gekennzeichnet,**
**daß** die Koordinaten der digitalisierten Bearbeitungsroute im Echtzeitortungssystem sich auf die linke und/ oder rechte Begrenzungsposition des am Arbeitsfahrzeug angeordneten Arbeitsgerätes, zum Beispiel die linke und/ oder rechte Halmteilerspitze beim Schneidwerk eines Mähdreschers, beziehen.

**28.** Routenplanungssystem nach einem oder mehreren der vorstehenden Ansprüche,
**dadurch gekennzeichnet,**
**daß** die digitalisierte Bearbeitungsroute in die Koordinaten eines auf dem Arbeitsfahrzeug installierten Echtzeitortungssystems, insbesondere des GPS-Systems, transformiert wird.

**29.** Routenplanungssystem nach einem oder mehreren der vorstehenden Ansprüche,
**dadurch gekennzeichnet,**
**daß** die Koordinaten eines auf dem Arbeitsfahrzeug installierten Echtzeitortungssystems, insbesondere eines GPS-Systems, in die digitalisierten lokalen Koordinaten des Routenplanungssystems transformiert werden.

**30.** Spurführungssystem für landwirtschaftliche Arbeitsfahrzeuge mit einer definierten Arbeitsbreite auf einem Feld, wobei ein Arbeitsfahrzeug ein hochpräzises Echtzeitortungssystem zur Bestimmung der Position und des Richtungsvektors der Fahrbewegung aufweisen,
**dadurch gekennzeichnet,**
**daß** das Arbeitsfahrzeug eine graphische Anzeige aufweist, auf der die momentane Position und Bewegungsrichtung des Arbeitsfahrzeuges und/ oder des am Arbeitsfahrzeug angeordneten Arbeitsgerätes als sogenannter Istwert und der Bearbeitungsfahrweg-Verlauf einer zuvor geplanten, digitalisierten Bearbeitungsroute des Feldes als sogenannte Sollwerte darstellbar sind.

**31.** Spurführungssystem nach Anspruch 30,
**dadurch gekennzeichnet,**
**daß** die Sollwerte und Istwerte einer elektronischen Auswerteeinheit des Arbeitsfahrzeuges zugeführt werden, wo aus dem Vergleich der Sollwerte und Istwerte laufend Lenksignale generiert werden.

**32.** Spurführungssystem nach einem oder mehreren der Ansprüche 30 oder 31,
**dadurch gekennzeichnet,**
**daß** die Lenksignale dem Fahrer optisch und/oder akustisch angezeigt werden.

**33.** Spurführungssystem nach einem oder mehreren der Ansprüche 30 bis 32,
**dadurch gekennzeichnet,**
**daß** die Fahrgeschwindigkeit des Arbeitsfahrzeuges während eines automatischen Lenkmanövers automatisch reduziert wird.

**34.** Spurführungssystem nach einem oder mehreren der Ansprüche 30 bis 33,
**dadurch gekennzeichnet,**
**daß** die der Spurführung zugrundeliegende Bearbeitungsroute Angaben über Position und Größe von Feldhindernissen aufweist.

**35.** Spurführungssystem nach einem oder mehreren der Ansprüche 30 bis 34,
**dadurch gekennzeichnet,**
**daß** Hindernisse auf dem Monitor angezeigt werden.

**36.** Spurführungssystem nach einem oder mehreren der Ansprüche 30 bis 35,
**dadurch gekennzeichnet,**
**daß** Hindernisdaten aus der Bearbeitungsroute für eine automatische Höhenregelung des am Arbeitsfahrzeug angeordneten Bearbeitungsgerätes verwendet werden.

**37.** Spurführungssystem nach einem oder mehreren der Ansprüche 30 bis 36,
**dadurch gekennzeichnet,**
**daß** die genau bestimmte Position der GPS-Empfangsantenne auf dem Arbeitsfahrzeug als Referenz-Istwert auf die linke und / oder rechte Begrenzungsposition des am Arbeitsfahrzeug angeordneten Arbeitsgerätes umtransformiert wird.

**38.** Spurführungssystem nach einem oder mehreren der Ansprüche 30 bis 37,
**dadurch gekennzeichnet,**
**daß** die genau bestimmte Position der GPS-Empfangsantenne auf dem Arbeitsfahrzeug als Referenz-Istwert auf die Mitte des am Arbeitsfahrzeug angeordneten Arbeitsgerätes umtransformiert wird.

**39.** Spurführungssystem nach einem oder mehreren der Ansprüche 30 bis 38,
**dadurch gekennzeichnet,**
**daß** die genau bestimmte Position der GPS-Empfangsantenne auf dem Arbeitsfahrzeug als Referenz-Istwert auf einen in Fahrtrichtung gegenüber dem Arbeitsgerät vorausliegenden virtuellen Punkt zur Verbesserung der Lenkstabilität umtransformiert wird.

**40.** Spurführungssystem nach einem oder mehreren der Ansprüche 30 bis 39,
**dadurch gekennzeichnet,**
**daß** als Echtzeitortungssystem ein PDGPS-System verwendet wird.

**41.** Spurführungssystem nach einem oder mehreren der Ansprüche 30 bis 40,
**dadurch gekennzeichnet,**
**daß** zusätzlich zum Echtzeitortungssystem ein auf Reflexortung beruhendes Erntegutkanten- Orientierungssystem vorhanden ist.

**42.** Spurführungssystem nach einem oder mehreren der Ansprüche 30 bis 41,
**dadurch gekennzeichnet,**
**daß** zusätzlich zum Echtzeitortungssystem ein auf Abtastung beruhendes Erntegutreihen-Erkennungssystem vorhanden ist.

**Claims**

**1.** A route planning system for agricultural working vehicles with a defined working width for generating working travel path configurations on a field, **characterised in that** one or more field-specific data and one or more working vehicle-specific data are inputtable into an electronic data processing apparatus and the working travel path configuration is generated in the form of a digitised working route on the basis of the field-specific and the working vehicle-specific data in the electronic data processing apparatus by means of a computation algorithm which has at least one optimisation criterion for the working route, and that the working vehicle has a graphical display on which the digitised working route can be represented.

**2.** A route planning system according to claim 1 **characterised in that** the field boundary is respectively ascertained by one of the following features or in any combination by specifying all corner points or in the case of rectangular or triangular fields by specifying the side lengths.

**3.** A route planning system according to one or more of the preceding claims **characterised in that** the field-specific data include one of the following features or in any combination with each other a plurality of features, more specifically a digital terrain relief delimited by the field boundary, information about the position and the size of obstacles such as trees or power pylons or the like on the field, information about terrain regions adjoining the field to be worked such as other fields, paths, roads which can be used for example for turning manoeuvres, information about fixed crop unloading positions and/or other field-specific data.

**4.** A route planning system according to one or more of the preceding claims **characterised in that** the working vehicle-specific data include one of the following features or in any combination with each other a plurality of the following features, more specifically the geometrical dimensions such as length, width and height of the working vehicle, information relating to the reaction of the working vehicle to a given lock of the steering axle, turning circle, information relating to the drive power of the working vehicle and/or information relating to power values of working implements on the working vehicle, information about the maximum speed of the working vehicle, information about optimum travel speeds under given ground conditions, information about optimum travel speeds for given kinds/types of crop, information about optimum travel speeds for given yield densities, information about consumption values of operating means such as for example fuel consumption, information about the capacity of the fuel tank, the capacity of storage containers or the grain tank, emptying rates of the storage containers or the grain tank, information about the maximum duration of use which is limited for example by maintenance intervals, and/ or other working vehicle-specific data.

**5.** A route planning system according to one or more of the preceding claims **characterised in that** it takes account of a plurality of working vehicles with the same or different working vehicle-specific data.

6.  A route planning system according to one or more of the preceding claims **characterised in that** the optimisation criterion or criteria for the working route comprises one or more of the following features, more specifically determining the shortest route, determining the fastest route, determining the most fuel-economical route, minimising lost times and/or travel distances for unloading/discharge from a tank of the crop material and/or other optimisation criteria.

7.  A route planning system according to one or more of the preceding claims **characterised in that** it specifies the position/positions at which the grain tank of a combine harvester is probably filled.

8.  A route planning system according to one or more of the preceding claims **characterised in that** it determines an appropriate parallel tank discharge path for tank discharge of a harvester on to a tank discharge vehicle travelling parallel.

9.  A route planning system according to one or more of the preceding claims **characterised in that** an optimisation criterion for the working route of a working vehicle spreading seeds, fertiliser, plant pesticide or weed killer is minimising lost times and/or travel paths for taking on again/refilling with the material to be spread.

10. A route planning system according to one or more of the preceding claims **characterised in that** an optimisation criterion is determining the least dangerous path.

11. A route planning system according to one or more of the preceding claims **characterised in that** route planning is carried out only on one or more partial surface regions of the field.

12. A route planning system according to one or more of the preceding claims **characterised in that** on the basis of the field boundary it implements a calculation of the total area.

13. A route planning system according to one or more of the preceding claims **characterised in that** calculation of the area is effected having regard to the height relief of the field.

14. A route planning system according to one or more of the preceding claims **characterised in that** it effects working area subdivision in parallel with travel lanes.

15. A route planning system according to one or more of the preceding claims **characterised in that** it effects working area subdivision in whole multiples of the operative working width.

16. A route planning system according to one or more of the preceding claims **characterised in that** it generates a co-ordination plan for a plurality of working vehicles on a field, in which the travel sequence of the working vehicles, the spacings in the travel direction and displacement transversely with respect to the travel direction are taken into account.

17. A route planning system according to one or more of the preceding claims **characterised in that** it includes working travel path configurations for turning manoeuvres.

18. A route planning system according to one or more of the preceding claims **characterised in that** at at least one position on the working route it calculates the area still to be worked.

19. A route planning system according to one or more of the preceding claims **characterised in that** the working route is drawn up on an electronic data processing apparatus of a farm/operating station.

20. A route planning system according to one or more of the preceding claims **characterised in that** the working route drawn up on the farm computer is transmitted by means of a portable data carrier such as for example a floppy disk, chip card or PCMCIA card, to an electronic data processing apparatus arranged on the working vehicle, a so-called vehicle computer.

21. A route planning system according to one or more of the preceding claims **characterised in that** the working route drawn up on the farm computer is transmitted to the vehicle computer by radio.

22. A route planning system according to one or more of the preceding claims **characterised in that** the working route is drawn up on an electronic data processing installation arranged on the working vehicle, a so-called vehicle computer.

23. A route planning system according to one or more of the preceding claims **characterised in that** the field-specific and/or working vehicle-specific data for drawing up the working route are transmitted to the vehicle computer by means of a portable data carrier or by radio.

24. A route planning system according to one or more of the preceding claims **characterised in that** the digitised working route is transformed into the co-ordinates of a real-time locating system installed on the working vehicle, in particular the GPS system.

25. A route planning system according to one or more of the preceding claims **characterised in that** working vectors are computed on the basis of the working sequence of the co-ordinates of the digitised working route in the real-time locating system.

26. A route planning system according to one or more of the preceding claims **characterised in that** the co-ordinates of the digitised working route in the real-time locating system relate to the centre of the working implement arranged on the working vehicle, for example the cutting mechanism of a combine harvester.

27. A route planning system according to one or more of the preceding claims **characterised in that** the co-ordinates of the digitised working route in the real-time locating system relate to the left and/or right delimiting position of the working implement arranged on the working vehicle, for example the left and/or right stalk divider tips in the cutting mechanism of a combine harvester.

28. A route planning system according to one or more of the preceding claims **characterised in that** the digitised working route is transformed into the co-ordinates of a real-time locating system installed on the working vehicle, in particular the GPS-system.

29. A route planning system according to one or more of the preceding claims **characterised in that** the co-ordinates of a real-time locating system installed on the working vehicle, in particular a GPS system, are transformed into the digitised local co-ordinates of the route planning system.

30. A tracking system for agricultural working vehicles with a defined working width on a field, wherein a working vehicle has a high-precision real-time locating system for determining the position and the directional vector of the travel movement, **characterised in that** the working vehicle has a graphical display on which can be represented the instantaneous position and direction of movement of the working vehicle and/or the working implement arranged on the working vehicle as a so-called actual value and the working travel path configuration of a previously planned digitised working route of the field as so-called reference values.

31. A tracking system according to claim 30 **characterised in that** the reference values and actual values are fed to an electronic evaluation unit of the working vehicle where steering signals are continuously generated from the comparison of the reference values and actual values.

32. A tracking system according to one or more of claims 30 and 31 **characterised in that** the steering signals are optically and/or acoustically displayed to the driver.

33. A tracking system according to one or more of claims 30 to 32 **characterised in that** the speed of travel of the working vehicle is automatically reduced during an automatic steering manoeuvre.

34. A tracking system according to one or more of claims 30 to 33 **characterised in that** the working route on which the tracking action is based has information about the position and size of obstacles in the field.

35. A tracking system according to one or more of claims 30 to 34 **characterised in that** obstacles are displayed on the monitor.

36. A tracking system according to one or more of claims 30 to 35 **characterised in that** obstacle data from the working route are used for automatic height regulation of the working implement arranged on the working vehicle.

**37.** A tracking system according to one or more of claims 30 to 36 **characterised in that** the precisely determined position of the GPS receiving antenna on the working vehicle as a reference actual value is transformed to the left and/or right limiting position of the working implement arranged on the working vehicle.

**38.** A tracking system according to one or more of claims 30 to 37 **characterised in that** the precisely determined position of the GPS receiving antenna on the working vehicle as a reference actual value is transformed to the centre of the working implement arranged on the working vehicle.

**39.** A tracking system according to one or more of claims 30 to 38 **characterised in that** the precisely determined position of the GPS receiving antenna on the working vehicle as a reference actual value is transformed to a virtual point preceding the working implement in the travel direction to improve steering stability.

**40.** A tracking system according to one or more of claims 30 to 39 **characterised in that** a PDGPS system is used as the real-time locating system.

**41.** A tracking system according to one or more of claims 30 to 40 **characterised in that** in addition to the real-time locating system there is a crop edge orientation system based on reflection locating.

**42.** A tracking system according to one or more of claims 30 to 41 **characterised in that** in addition to the real-time locating system there is a crop row detection system based on scanning.

**Revendications**

**1.** Système de planification d'itinéraire pour des véhicules agricoles avec une largeur de travail définie, pour générer des tracés d'itinéraires de travail dans un champ, **caractérisé en ce qu'**on entre dans un dispositif électronique de traitement de données une ou plusieurs données spécifiques du champ et une ou plusieurs données spécifiques du véhicule de travail et, sur la base des données spécifiques du champ et des données spécifiques du véhicule de travail, on génère dans le dispositif électronique de traitement de données, à l'aide d'un algorithme de calcul qui comporte au moins un critère d'optimisation pour l'itinéraire de travail, le tracé de l'itinéraire de travail sous la forme d'un itinéraire de travail numérisé et **en ce que** le véhicule de travail comporte un moyen d'affichage graphique sur lequel l'itinéraire de travail numérisé peut être représenté.

**2.** Système de planification d'itinéraire selon la revendication 1, **caractérisé en ce qu'**on détermine les limites du champ à l'aide de l'une des caractéristiques suivantes ou d'une combinaison quelconque de celles-ci en indiquant tous les angles ou dans le cas de champs de forme rectangulaire ou triangulaire en indiquant la longueur des côtés.

**3.** Système de planification d'itinéraire selon une ou plusieurs des revendications précédentes, **caractérisé en ce que** les données spécifiques du champ comprennent l'une des caractéristiques suivantes ou une combinaison de plusieurs caractéristiques suivantes, à savoir un relief numérique du terrain défini par les limites du champ, des informations sur la position et la taille d'obstacles tels que des arbres ou des pilones électriques ou similaires dans le champ, des informations sur des zones de terrain contigues au champ à travailler, telles que d'autres champs, chemins, routes, qui par exemple peuvent être utilisés pour des manoeuvres, des informations sur des positions fixes de déchargement du produit récolté et/ou d'autres données spécifiques du champ.

**4.** Système de planification d'itinéraire selon une ou plusieurs des revendications précédentes, **caractérisé en ce que** les données spécifiques du véhicule de travail comprennent l'une des caractéristiques suivantes ou une combinaison de plusieurs caractéristiques suivantes, à savoir les dimensions géométriques, telles que la longueur, la largeur, la hauteur du véhicule de travail, des informations sur la réaction du véhicule de travail à un certain braquage de l'essieu directeur, le rayon de braquage, des informations sur la puissance du véhicule de travail et/ou des informations sur les puissances d'appareils de travail montés sur le véhicule de travail, une information sur la vitesse maximale du véhicule de travail, des informations sur les vitesses optimales pour des sols donnés, des informations sur les vitesses optimales pour certains types/variétés de produit récolté, des informations sur les vitesses optimales pour des rendements de culture donnés, des informations sur les consommations de produits consommables tels que la consommation de carburant, une information sur la capacité du réservoir de carburant, la capacité de trémies de stockage ou de la trémie à grain, les vitesses de vidage des trémies de stockage ou de la trémie à grain, des informations sur la durée maximale d'utilisation, qui par exemple est limitée par des intervalles d'entretien, et/ou d'autres données spécifiques du véhicule de travail.

**5.** Système de planification d'itinéraire selon une ou plusieurs des revendications précédentes, **caractérisé en ce que** celui-ci prend en compte plusieurs véhicules de travail avec des données spécifiques du véhicule identiques ou différentes.

**6.** Système de planification d'itinéraire selon une ou plusieurs des revendications précédentes, **caractérisé en ce que** le critère ou les critères d'optimisation pour l'itinéraire de travail comprend/comprennent une ou plusieurs des caractéristiques suivantes, à savoir la détermination du chemin le plus court, la détermination du chemin le plus rapide, la détermination du chemin le plus économique sur le plan du carburant, la minimisation des pertes de temps et/ou des trajets pour le déchargement/la vidange du produit récolté et/ou d'autres paramètres d'optimisation.

**7.** Système de planification d'itinéraire selon une ou plusieurs des revendications précédentes, **caractérisé en ce que** celui-ci indique la position/les positions où la trémie à grain doit être pleine d'après les prévisions.

**8.** Système de planification d'itinéraire selon une ou plusieurs des revendications précédentes, **caractérisé en ce que** celui-ci détermine un trajet de vidage en parallèle favorable pour décharger une machine de récolte dans un véhicule récepteur se déplaçant en parallèle.

**9.** Système de planification d'itinéraire selon une ou plusieurs des revendications précédentes, **caractérisé en ce qu'**un critère d'optimisation pour l'itinéraire de travail d'un véhicule de travail répandant une semence, un engrais, un produit de traitement préventif ou un produit désherbant est la minimisation des pertes de temps et/ou des trajets pour le rechargement en produit à épandre.

**10.** Système de planification d'itinéraire selon une ou plusieurs des revendications précédentes, **caractérisé en ce qu'**un critères d'optimisation est la détermination du chemin le moins dangereux.

**11.** Système de planification d'itinéraire selon une ou plusieurs des revendications précédentes, **caractérisé en ce que** la planification de l'itinéraire est réalisée seulement sur une partie ou sur plusieurs parties de la surface du champ.

**12.** Système de planification d'itinéraire selon une ou plusieurs des revendications précédentes, **caractérisé en ce que** celui-ci calcule la surface totale à partir des limites du champ.

**13.** Système de planification d'itinéraire selon une ou plusieurs des revendications précédentes, **caractérisé en ce que** le calcul de la surface est réalisé en tenant compte du relief du champ.

**14.** Système de planification d'itinéraire selon une ou plusieurs des revendications précédentes, **caractérisé en ce que** celui-ci réalise un découpage en travées parallèlement à des chemins.

**15.** Système de planification d'itinéraire selon une ou plusieurs des revendications précédentes, **caractérisé en ce que** celui-ci réalise un découpage en travées par multiples entiers de la largeur de travail efficace.

**16.** Système de planification d'itinéraire selon une ou plusieurs des revendications précédentes, **caractérisé en ce que** celui-ci génère un programme de coordination pour plusieurs véhicules de travail dans un champ, en tenant compte de l'ordre de déplacement des véhicules de travail, des distances dans la direction de déplacement et du décalage transversalement à la direction de déplacement.

**17.** Système de planification d'itinéraire selon une ou plusieurs des revendications précédentes, **caractérisé en ce que** celui-ci englobe des portions de parcours de travail pour les manoeuvres de changement de direction.

**18.** Système de planification d'itinéraire selon une ou plusieurs des revendications précédentes, **caractérisé en ce que** celui-ci, en au moins une position sur l'itinéraire de travail, calcule la surface restant à traiter.

**19.** Système de planification d'itinéraire selon une ou plusieurs des revendications précédentes, **caractérisé en ce que** l'itinéraire de travail est établi dans un dispositif de traitement de données électronique d'un poste à la ferme ou d'un poste de l'exploitation.

**20.** Système de planification d'itinéraire selon une ou plusieurs des revendications précédentes, **caractérisé en ce**

**que** l'itinéraire de travail établi sur l'ordinateur à la ferme est transféré sur un dispositif de traitement de données électronique embarqué du véhicule, couramment appelé un calculateur de bord, au moyen d'un support de données mobile, tel que par exemple une disquette, une carte à puce ou une carte PCMCIA.

21. Système de planification d'itinéraire selon une ou plusieurs des revendications précédentes, **caractérisé en ce que** l'itinéraire de travail établi sur l'ordinateur à la ferme est transféré par radio sur le calculateur de bord.

22. Système de planification d'itinéraire selon une ou plusieurs des revendications précédentes, **caractérisé en ce que** l'itinéraire de travail établi est établi sur une installation de traitement de données électronique embarquée du véhicule, couramment appelée un calculateur de bord.

23. Système de planification d'itinéraire selon une ou plusieurs des revendications précédentes, **caractérisé en ce que** les données spécifiques du champ et/ou les données spécifiques du véhicule, pour l'établissement de l'itinéraire de travail, sont transférées sur le calculateur de bord, au moyen d'un support de données mobile ou par radio.

24. Système de planification d'itinéraire selon une ou plusieurs des revendications précédentes, **caractérisé en ce que** l'itinéraire de travail numérisé est transformé dans les coordonnées d'un système de localisation en temps réel installé à bord du véhicule de travail, en particulier d'un système GPS.

25. Système de planification d'itinéraire selon une ou plusieurs des revendications précédentes, **caractérisé en ce qu'**à partir de l'ordre de traitement des coordonnées de l'itinéraire de travail dans le système de localisation en temps réel on calcule des vecteurs de direction de travail.

26. Système de planification d'itinéraire selon une ou plusieurs des revendications précédentes, **caractérisé en ce que** les coordonnées de l'itinéraire de travail numérisé dans le système de localisation en temps réel se rapporte au milieu de l'appareil de travail disposé sur le véhicule de travail, par exemple de l'appareil de coupe d'une moissonneuse-batteuse.

27. Système de planification d'itinéraire selon une ou plusieurs des revendications précédentes, **caractérisé en ce que** les coordonnées de l'itinéraire de travail numérisé dans le système de localisation en temps réel se rapporte au bord gauche et/ou au bord droit de l'appareil de travail disposé sur le véhicule de travail, par exemple à la pointe gauche et/ou à la pointe droite du diviseur de l'appareil de coupe d'une moissonneuse-batteuse.

28. Système de planification d'itinéraire selon une ou plusieurs des revendications précédentes, **caractérisé en ce que** l'itinéraire de travail numérisé est transformé dans les coordonnées d'un système de localisation en temps réel installé à bord du véhicule de travail, en particulier d'un système GPS.

29. Système de planification d'itinéraire selon une ou plusieurs des revendications précédentes, **caractérisé en ce que** les coordonnées d'un système de localisation en temps réel installé à bord du véhicule de travail, en particulier d'un système GPS sont transformées dans les coordonnées locales numérisées du système de planification d'itinéraire

30. Système de guidage pour des véhicules de travail agricoles avec une largeur de travail définie dans un champ, un véhicule de travail comportant un système de localisation en temps réel à haute résolution pour déterminer la position et le vecteur de direction du déplacement, **caractérisé en ce que** le véhicule de travail comporte un afficheur graphique, sur lequel la position et la direction de déplacement du véhicule de travail et/ou de l'appareil de travail disposé sur ledit véhicule de travail peuvent être réprésentés en tant que valeur dite réelle et le tracé d'un trajet de travail pour un itinéraire de travail du champ préalablement planifié, numérisé, peut être représenté en tant que valeur dite de consigne.

31. Système de guidage selon la revendication 30, **caractérisé en ce que** les valeurs de consigne et les valeurs réelles sont transmises à une unité de traitement électronique du véhicule de travail, où des signaux de guidage sont générés sur la base de la comparaison entre valeurs de cosnigne et valeurs réelles

32. Système de guidage selon une ou plusieurs des revendications 30 ou 31, **caractérisé en ce que** les signaux de guidage sont indiqués par voie optique et/ou acoustique au conducteur.

33. Système de guidage selon une ou plusieurs des revendications 30 à 32, **caractérisé en ce que** la vitesse de déplacement du véhicule de travail est abaissée automatiquement pendant une manoeuvre automatique de changement de direction.

34. Système de guidage selon une ou plusieurs des revendications 30 à 33, **caractérisé en ce que** l'itinéraire de travail à la base du guidage comporte des informations sur la position et la dimension d'obstacles du champ.

35. Système de guidage selon une ou plusieurs des revendications 30 à 34, **caractérisé en ce que** les obstacles sont affichés sur le moniteur.

36. Système de guidage selon une ou plusieurs des revendications 30 à 35, **caractérisé en ce que** les données d'obstacles sur l'itinéraire de travail sont utilisées pour un réglage automatique de la hauteur de l'appareil de travail disposé sur le véhicule de travail.

37. Système de guidage selon une ou plusieurs des revendications 30 à 36, **caractérisé en ce que** la position définie avec précision de l'antenne réceptrice GPS sur le véhicule de travail, en tant que valeur de référence réelle, est convertie en position du bord gauche et/ou du bord droit de l'appareil de travail disposé sur le véhicule de travail.

38. Système de guidage selon une ou plusieurs des revendications 30 à 37, **caractérisé en ce que** la position définie avec précision de l'antenne réceptrice GPS sur le véhicule de travail, en tant que valeur de référence réelle est convertie en milieu de l'appareil de travail disposé sur le véhicule de travail.

39. Système de guidage selon une ou plusieurs des revendications 30 à 38, **caractérisé en ce que** la position définie avec précision de l'antenne réceptrice GPS sur le véhicule de travail, en tant que valeur de référence réelle est convertie en un point virtuel situé en avant de l'appareil de travail dans la direction, de déplacement aux fins d'améliorer la stabilité de guidage.

40. Système de guidage selon une ou plusieurs des revendications 30 à 39, **caractérisé en ce qu'**on utilise comme système de localisation en temps réel un système PDGPS.

41. Système de guidage selon une ou plusieurs des revendications 30 à 40, **caractérisé en ce qu'**en plus du système de localisation en temps réel il est prévu un système d'orientation par rapport au bord de produit récolté travaillant par localisation reflex.

42. Système de guidage selon une ou plusieurs des revendications 30 à 41, **caractérisé en ce qu'**en plus du système de localisation en temps réel il est prévu un système de détection des rangs de produit récolté travaillant par palpage.

Optimierungskriterien

feldspezifische Daten

Berechungsalgorithmus
Transformation der
Koordinaten in das
GPS-System

arbeitsfahrzeugspezifische
Daten

digitale Bearbeitungsroute/
Darstellung auf einem Monitor

Fig.1

Fig. 2B

Fig. 2 A

EP 0 821 296 B1

Abtankfahrzeug

Fig.3

20

Fig.4 A

Fig.4B

Abtankfahrzeug

Fig.5

Fig.6

Fig.8

GPS-Antenne

Fig.7

P

EP 0 821 296 B1